Europäisches Patentamt

European Patent Office

Office européen des brevets

(19)

(11) Veröffentlichungsnummer: **0 023 987**
**B1**

(12) # EUROPÄISCHE PATENTSCHRIFT

(45) Veröffentlichungstag der Patentschrift:
17.08.83

(21) Anmeldenummer: 80104183.1

(22) Anmeldetag: 17.07.80

(51) Int. Cl.³: **C 08 L 75/04**, C 08 K 5/34, C 08 G 18/28, C 08 G 18/08

(54) Stabile Füllstoff-Polyol-Dispersionen, ein Verfahren zu deren Herstellung und die Verwendung zur Herstellung von gegebenenfalls geschäumten Polyurethankunststoffen.

(30) Priorität: 09.08.79 DE 2932304

(43) Veröffentlichungstag der Anmeldung:
18.02.81 Patentblatt 81/7

(45) Bekanntmachung des Hinweises auf die Patenterteilung:
17.08.83 Patentblatt 83/33

(84) Benannte Vertragsstaaten:
BE DE FR GB IT NL

(56) Entgegenhaltungen:
DE-A-2 845 572

(73) Patentinhaber: BASF Aktiengesellschaft,
Carl-Bosch-Strasse 38, D-6700 Ludwigshafen (DE)

(72) Erfinder: Nissen, Dietmar, Dr., Ziegelhäuser
Landstrasse 31, D-6900 Heidelberg (DE)
Erfinder: Marx, Matthias, Dr., Seebacher Strasse 49,
D-6702 Bad Duerkheim 1 (DE)
Erfinder: Jarre, Wolfgang, Dr., Roggensteiner Allee 68a,
D-8031 Eichenau (DE)
Erfinder: Schoen, Ernst, Dr., Burgunderstrasse 40,
D-6730 Neustadt 14 (DE)
Erfinder: Decker, Walter, Koenigsbacher Strasse 72,
D-6700 Ludwigshafen (DE)

EP 0 023 987 B1

## Stabile Füllstoff-Polyol-Dispersionen, ein Verfahren zu deren Herstellung und die Verwendung zur Herstellung von gegebenenfalls geschäumten Polyurethankunststoffen

Die Erfindung betrifft stabile Melamin-Polyol-Dispersionen, die enthalten

A) 5 bis 70 Gew.-% Melamin, wobei mindestens 90% der Melaminpartikel eine Teilchengröße von kleiner als 10 µm besitzen,

B) 95 bis 30 Gew.-% eines Polyols, wobei die Gew.-% bezogen sind auf das Melamin-Polyol-Gewicht und

C) 0,001 bis 20 Gew.-%, bezogen auf das Melamingewicht, mindestens eines Stabilisators

und die hergestellt werden durch in situ Zerkleinerung mit örtlichen Energiedichten von 10 bis 3000 kWh/m³ und gleichzeitiger Dispergierung des Melamins in den Polyolen sowie die Verwendung der Dispersionen zur Herstellung von gegebenenfalls geschäumten Polyurethan-Kunststoffen.

Die Herstellung von Dispersionen aus organischen Polymeren und hydroxylgruppenhaltigen Polyäthern ist bekannt. Hierbei werden üblicherweise wäßrige Polymerdispersionen mit Polyätherolen gemischt und anschließend das Wasser abgetrennt. Es wurde ferner vorgeschlagen, Pfropfpolymere durch in situ Polymerisation von äthylenisch ungesättigten Monomeren in gegebenenfalls äthylenisch ungesättigten Polyätherolen herzustellen und die erhaltenen Produkte zur Herstellung von Polyurethanen zu verwenden.

Die Verwendung von Melamin als Flammschutzmittel zur Herstellung von gegebenenfalls isocyanuratgruppenhaltigen, geschäumten Polyurethankunststoffen wird beispielsweise in den deutschen Offenlegungsschriften 2 043 917, 2 348 838 und 2 809 084 beschrieben. Nach Angaben dieser Publikationen wird das Melamin unmittelbar vor der Schaumstoffherstellung in das Polyol eingerührt. Nachteilig ist hierbei, daß die Melamin-Polyol-Mischungen sofort verarbeitet werden müssen, da bereits nach kurzer Zeit das Melamin sedimentiert.

Aufgabe der vorliegenden Erfindung war es, gut handhabbare, lagerstabile, nicht zum Sedimentieren neigende Dispersionen von Melamin in Polyolen herzustellen.

Überraschenderweise zeigte sich, daß man lagerstabile Melamin-Polyol-Dispersionen erhält, wenn man das Melamin in den Polyolen in Gegenwart von Stabilisatoren so zerkleinert, daß mindestens 90% der Melaminpartikel eine Teilchengröße von kleiner als 10 µm besitzen und man als Stabilisatoren Verbindungen aus der Gruppe

a) der Kieselsäuren und Silikate,

b) der Salze von perfluorierten Alkylcarbonsäuren, Alkylsulfonsäuren und perfluorierten Alkylsulfonsäuren sowie Polyperfluorätherole und/oder

c) der Salze von Fettalkoholsulfaten verwendet.

Gegenstand der vorliegenden Erfindung sind somit stabile Melamin-Polyol-Dispersionen, die enthalten

A) 5 bis 70 Gew.-%, bezogen auf das Melamin-Polyol-Gewicht, Melamin, wobei mindestens 90% der Melaminpartikel eine Teilchengröße von kleiner als 10 µm besitzen,

B) 95 bis 30 Gew.-%, bezogen auf das Melamin-Polyol-Gewicht, eines Polyols mit einem Molekulargewicht von 200 bis 16 000 und

C) 0,001 bis 20 Gew.-%, bezogen auf das Melamingewicht, eines oder mehrerer Stabilisatoren,

dadurch gekennzeichnet, daß man als Stabilisatoren Verbindungen aus der Gruppe

a) der Kieselsäuren und Silikate,

b) der Salze von perfluorierten Alkylcarbonsäuren mit 4 bis 20 Kohlenstoffatomen, Salze von Alkylsulfonsäuren und perfluorierten Alkylsulfonsäuren mit 4 bis 20 Kohlenstoffatomen und Polyperfluorätherole mit Molekulargewichten von 300 bis 6000 und/oder

c) der Salze von Fettalkoholsulfaten mit 6 bis 30 Kohlenstoffatomen

verwendet und daß das Melamin in situ in den Polyolen in Gegenwart der Stabilisatoren mit Energiedichten von 10 bis 3000 kWh/m³ zerkleinert worden ist.

Die Melamin-Polyol-Dispersionen zeigten nach Lagerzeiten von mehr als 4 Monaten noch keine Melaminablagerung. Vorteilhaft ist ferner, daß die Dispersionen auch bei sehr hohen Melamingehalten, wie z. B. 50 Gew.-%, bezogen auf das Melamin-Polyol-Gewicht, und 50°C üblicherweise Viskositäten von kleiner als 4000 mPas, vorzugsweise von 2400 bis 3200 mPas besitzen und daher auf üblichen Mehrkomponenten-Verarbeitungsmaschinen zur Polyurethanherstellung noch gut handhabbar sind.

Die Viskosität der Melamin-Polyol-Dispersionen ist abhängig u. a. von der Art und Menge des zugesetzten Stabilisators und insbesondere vom Melamingehalt der Dispersion, wobei beispielsweise die Viskosität bei 50°C in Gegenwart des gleichen Stabilisators von 800 mPas bei einem Melamingehalt von 24 Gew.-% auf 3100 mPas bei einem Melamingehalt von 50 Gew.-% ansteigt.

Zu den zur Herstellung der erfindungsgemäßen Melamin-Polyol-Dispersionen verwendbaren Ausgangskomponenten ist folgendes auszuführen:

Melamin wird in der handelsüblichen Form verwendet und besitzt üblicherweise folgende Korngrößenverteilung:

10 Gew.-% der Teilchen sind größer als 30 μm,
30 Gew.-% der Teilchen sind größer als 24 μm,
50 Gew.-% der Teilchen sind größer als 20 μm,
70 Gew.-% der Teilchen sind größer als 16 μm und
90 Gew.-% der Teilchen sind größer als 11 μm.

Geeignete, als Dispergiermedium verwendbare Polyole besitzen Funktionalitäten von 2 bis 8, vorzugsweise 2 bis 3, und Molekulargewichte von 200 bis 16 000, vorzugsweise 200 bis 8000. Bewährt haben sich und daher vorzugsweise verwendet werden Polyesterole und insbesondere Polyätherole. In Betracht kommen jedoch auch andere hydroxylgruppenhaltige Polymere mit den genannten Molekulargewichten, beispielsweise Polyesteramide, Polyacetale, wie Polyoxymethylene und Butandiolformale und Polycarbonate, insbesondere solche, hergestellt aus Diphenylcarbonat und Hexandiol-1,6 durch Umesterung.

Für spezielle Anwendungsbereiche können die Polyole teilweise durch monofunktionelle primäre und/oder sekundäre Hydroxylgruppen aufweisende Verbindungen mit Molekulargewichten von 200 bis 16 000 ersetzt werden. Sofern monofunktionelle Hydroxylverbindungen mitverwendet werden, werden diese in Mengen von 1 bis 30 Gew.-%, vorzugsweise von 2 bis 15 Gew.-%, bezogen auf das Polyolgewicht, eingesetzt.

Die Polyesterole können beispielsweise aus Dicarbonsäuren, vorzugsweise aliphatischen Dicarbonsäuren, mit 2 bis 12, vorzugsweise 4 bis 8 Kohlenstoffatomen im Alkylenrest und mehrwertigen Alkoholen, vorzugsweise Diolen, hergestellt werden. Genannt seien beispielhaft aliphatische Dicarbonsäuren, wie Pimelinsäure, Korksäure, Azelainsäure, Sebacinsäure, Undecandisäure, Dodecandisäure und vorzugsweise Bernstein-, Glutar- und Adipinsäure und aromatische Dicarbonsäuren, wie Phthalsäure und Terephthalsäure. Beispiele für zwei- und mehrwertige, insbesondere dreiwertige Alkohole sind: 1,2- bzw. 1,3-Propylenglykol, Dipropylenglykol, Hexandiol-1,6, Decandiol-1,10, Glycerin, Trimethylolpropan und vorzugsweise Äthylenglykol, Diäthylenglykol und Butan-diol-1,4.

Die Dicarbonsäuren und zweiwertigen Alkohole können sowohl einzeln als auch in Form von Gemischen eingesetzt werden. Beispielhaft genannt seien Polyesterole auf Basis Adipinsäure-Diäthylenglykol, Adipinsäure-Hexandiol-Neopentylglykol, Adipinsäure-Äthylenglykol-Butandiol, Adipin-, Glutar-, Bernsteinsäure-Äthylenglykol-Diäthylenglykol u. a.

Die Polyesterole sind üblicherweise di- bis trifunktionell und besitzen Molekulargewichte von 800 bis 4000, vorzugsweise 1500 bis 3000 und Hydroxylzahlen von 28 bis 210, vorzugsweise von 35 bis 110.

Vorzugsweise als Polyole verwendet werden jedoch Polyätherole, die nach bekannten Verfahren aus einem oder mehreren Alkylenoxiden mit 2 bis 4 Kohlenstoffatomen im Alkylenrest und einem Startermolekül, das 2 bis 8, vorzugsweise 2 bis 4 aktive Wasserstoffatome enthält, hergestellt werden. Geeignete Alkylenoxide sind beispielsweise Tetrahydrofuran, 1,3-Propylenoxid, 1,2- bzw. 2,3-Butylenoxid, Styroloxid und vorzugsweise Äthylenoxid und 1,2-Propylenoxid. Die Alkylenoxide können einzeln, alternierend nacheinander oder als Mischungen verwendet werden. Als Startermoleküle kommen beispielsweise in Betracht: Wasser, Dicarbonsäuren, wie Bernsteinsäure, Adipinsäure, Phthalsäure und Terephthalsäure, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Äthylendiamin, 1,2- bzw. 1,3-Propylendiamin, 1,4-Butylendiamin, 1,6-Hexamethylendiamin und 4,4'-, 2,4'- und 2,2'-Diaminodiphenylmethan, 2,4- und 2,6-Diamino-toluol, Alkanolamine, wie Äthanolamin, Diäthanolamin, N-Methyl- und N-Äthyl-diäthanolamin und Triäthanolamin, Hydrazin und vorzugsweise mehrwertige, insbesondere zwei- und dreiwertige Alkohole, wie Äthylenglykol, Propylenglykol-1,2 und -1,3, Diäthylenglykol, Dipropylenglykol, Butylenglykol-1,4, Hexamethylenglykol-1,6, Glycerin, Trimethylolpropan, Pentaerytrit, Sorbit und Saccharose.

Bevorzugt verwendet werden im wesentlichen di- und/oder trifunktionelle Polyätherole mit Molekulargewichten von 200 bis 16 000, vorzugsweise 200 bis 8000 und Hydroxylzahlen von 20 bis 600, vorzugsweise von 20 bis 110, die sowohl Äthylenoxid- als auch 1,2-Propylenoxideinheiten in der Oxalkylenkette enthalten, wobei diese entweder statistisch oder blockweise in der Oxalkylenkette angeordnet sein können. Zweckmäßigerweise eingesetzt werden Polyätherole, die vorzugsweise primäre Hydroxylgruppen besitzen und insbesondere trifunktionelle Polyätherole mit Hydroxylzahlen von 20 bis 60.

Geeignete monofunktionelle Hydroxylgruppen aufweisende Verbindungen, die gegebenenfalls mit den Polyolen im Gemisch eingesetzt werden können, sind beispielsweise hydroxylgruppenhaltige Polyäther mit Molekulargewichten von 200 bis 16 000, vorzugsweise von 400 bis 4000, die durch Umsetzung der vorstehend beschriebenen Alkylenoxide mit monofunktionellen Startermolekülen erhalten werden. Im einzelnen seien als monofunktionelle Startermoleküle genannt: niedermolekulare monofunktionelle aliphatische Alkohole mit 1 bis 18, vorzugsweise 1 bis 6 Kohlenstoffatomen im Alkylrest, wie Methanol, Äthanol, Propanol, Butanol, Hexanol, Decanol, Laurylalkohol, Neopentylalkohol, Äthylenhexanol, Cyclohexanol, tert.-Butylcyclohexanol, Phenyläthanol und insbesondere Allylalkohol und Methylbutenol; aromatische Monohydroxylverbindungen mit 6 bis 24 Kohlenstoffatomen, wie Phenol, Naphthol, alkylierte Phenole, wie Kresol, Trimethylphenol, Nonylphenol, Dodecylphenol u. a. und organische Monocarbonsäuren mit 1 bis 18 Kohlenstoffatomen, wie Essigsäure, Propionsäure, Buttersäure, Äthylenhexansäure, Acrylsäure und ähnliche Verbindungen. Die Startermoleküle können auch hier sowohl einzeln als auch in Gemischen untereinander eingesetzt werden, ebenso können die Alkylenoxide einzeln, alternierend nacheinander oder als Mischungen zur Polymerisation verwendet werden. Die Polymerisation der Alkylenoxide mit Hilfe der Startermoleküle wird unter an sich bekannten Reaktionsbedingungen, gegebenenfalls in Gegenwart von üblichen Katalysatoren durchgeführt. Ebenso können hydroxylgruppenhaltige Polyäther aus Tetrahydrofuran oder Gemischen von Tetrahydrofuran mit den genannten Alkylenoxiden verwendet werden.

Durch die in situ Zerkleinerung des Melamins im Polyol auf Teilchengrößen kleiner als 10 μm von mindestens 90% der Melaminpartikel können bereits relativ stabile Dispersionen erhalten werden. Dieser Effekt wird jedoch durch den erfindungsgemäßen Zusatz von ausgewählten Stabilisatoren in Mengen von 0,001 bis 20 Gew.-%, vorzugsweise 0,005 bis 5 Gew.-%, bezogen auf das Melamingewicht, noch erheblich verbessert werden. Erfindungsgemäß verwendet werden Stabilisatoren aus der Gruppe

a) der Kieselsäuren und Silikate,
b) Salze, vorzugsweise Alkalimetallsalze, wie Natrium- oder Kaliumsalze, und Ammoniumsalze von perfluorierten Alkylcarbonsäuren mit 4 bis 20, vorzugsweise 8 bis 18 Kohlenstoffatomen, Salze von Alkylsulfonsäuren und perfluorierten Alkylsulfonsäuren mit 4 bis 20, vorzugsweise 8 bis 18 Kohlenstoffatomen sowie Polyperfluorätherole mit Molekulargewichten von 300 bis 6000, vorzugsweise von 500 bis 4000 und/oder
c) Salze von Fettalkoholsulfaten mit 6 bis 30, vorzugsweise 8 bis 22 Kohlenstoffatomen.

Vorzugsweise zur Anwendung kommen jedoch Mischungen aus mindestens einem Stabilisator der Gruppe (a) und/oder mindestens einem Stabilisator aus der Gruppe (b) und/oder mindestens einem Stabilisator aus der Gruppe (c).

Die Kieselsäuren und Silikate werden, bezogen auf das Melamingewicht, in Mengen von 0,01 bis 20 Gew.-%, vorzugsweise 0,05 bis 5 Gew.-%, eingesetzt. Die Kieselsäuren können durch Flammenhydrolyse oder durch Fällung hergestellt werden. Durch Flammenhydrolyse gewonnene Kieselsäuren sind beispielsweise unter dem Warenzeichen ®Aerosil der Degussa, Frankfurt, im Handel. Entsprechende Produkte besitzen Schüttdichten von ungefähr 40 bis 60 g/l., Oberflächen nach der BET-Methode von ungefähr 130 bis 410 m²/g (S. Brunauer et al., J. Amer. Chem. Soc. 60, 309 [1938]) und enthalten mehr als 99,8% $SiO_2$, <0,05% $Al_2O_3$, <0,003% $Fe_2O_3$, <0,03% $TiO_2$ und <0,025% Chlorwasserstoff.

Gefällte Kieselsäuren besitzen Stampfdichten (nach DIN 53 194) von 70 bis 200 g/l, Oberflächen nach BET von 160 bis 650 m²/g und enthalten 98 bis 99,5% $SiO_2$, 0,2% $Al_2O_3$, 0,01 bis 0,03% $Fe_2O_3$ und 0,2 bis 1,0% $Na_2O$. Gefällte Kieselsäuren werden beispielsweise von der Degussa, Frankfurt, hergestellt und sind unter den Namen gefällte Kieselsäuren FK 320, FK 300, FK 310, FK 383, ®Sipenat und ®Durosil käuflich erwerbbar.

Erfindungsgemäß verwendbare Silikate besitzen Stampfdichten (nach DIN 53 194) von ungefähr 135 bis 165 g/l, Oberflächen nach BET von 35 bis 100 m²/g und enthalten ungefähr 66 bis 91% $SiO_2$, 0,2 bis 26% $Al_2O_3$, ungefähr 0,03% $Fe_2O_3$, gegebenenfalls ungefähr 6% CaO und ungefähr 2 bis 8% $Na_2O$. Entsprechende Produkte werden von der Degussa, Frankfurt, hergestellt und unter den Bezeichnungen Aluminiumsilikat P 820, ®Transpafill und ®Calsil vertrieben.

Die Stabilisatoren der Gruppen (b) und (c) werden in Mengen von 0,001 bis 5 Gew.-%, vorzugsweise 0,005 bis 1 Gew.-%, bezogen auf das Melamingewicht, eingesetzt. Im einzelnen seien beispielhaft genannt: die Kaliumsalze von perfluorierten Alkylcarbonsäuren mit 4 bis 20 Kohlenstoffatomen, wie Perfluorcapronsäure, Perfluorönanthsäure, Perfluoroctansäure, Perfluorpelargonsäure, Perfluorcaprinsäure, Perfluorlaurinsäure, Perfluormyristinsäure, Perfluorpalmitinsäure, Perfluorstearinsäure, Perfluorölsäure, Perfluorlinolsäure, Perfluorlinolensäure, die Kaliumsalze von gegebenenfalls perfluorierten Alkylsulfonsäuren mit 4 bis 20 Kohlenstoffatomen, wie Perfluorbutan-, Perfluorpentan-, Perfluorhexan-, Perfluorheptan-, Perfluoroctan-, Perfluordodecan- und Perfluorhexadecansulfonsäure und Polyperfluorätherole mit Molekulargewichten von 300 bis 6000, wie die entsprechenden Polymerisate des Tetrafluoräthylenoxids und Hexafluorpropenepoxids sowie Salze von Fettalkoholsulfaten, wie Natriumlaurylsulfat.

Kaliumperfluoralkylsulfonate, Ammoniumperfluoralkylcarboxylate, Kalium-fluoralkylcarboxylate und fluoriertes Alkylpolyoxyäthylenäthanol sind Handelsprodukte und werden von der Firma 3 M Company unter dem Warenzeichen ®Fluorad vertrieben. Natriumsalze von Fettalkoholsulfaten,

# 0 023 987

z. B. Laurylsulfat, sind ebenfalls erhältlich z. B. unter dem Warenzeichen ®Duponol der Firma Dupont.

Wie bereits dargelegt wurde, ist erfindungswesentlich, daß 90% oder mehr der Melaminpartikel in der Melamin-Polyol-Dispersion eine Teilchengröße von kleiner als 10 µm, vorzugsweise kleiner als 6 µm, besitzen, wobei die Melaminpartikel nach der Zerkleinerung folgende Korngrößenverteilung aufweisen:

90 Gew.-% der Teilchen sind kleiner als 10 µm,
70 Gew.-% der Teilchen sind kleiner als 4,5 µm,
50 Gew.-% der Teilchen sind kleiner als 3 µm,
30 Gew.-% der Teilchen sind kleiner als 2 µm und
10 Gew.-% der Teilchen sind kleiner als 1,5 µm.

Wesentlich ist ferner, daß das Melamin in situ in den Polyolen in Gegenwart der Stabilisatoren mit Hilfe von hohen örtlichen Energiedichten auf die genannten Teilchengrößen zerkleinert wird. Als hohe örtliche Energiedichten im Sinne der Erfindung sind hierbei Energiedichten von 10 bis 3000 kWh/m³, vorzugsweise von 20 bis 1000 kWh/m³, zu verstehen. Dies entspricht installierten Leistungen pro Volumen-Strom-Einheit von etwa 100 bis 2500 kW/m³.

Die Melamin-Polyol-Dispersionen, die 5 bis 70 Gew.-%, vorzugsweise 15 bis 50 Gew.-% Melamin und 95 bis 30 Gew.-%, vorzugsweise 85 bis 50 Gew.-% Polyol, jeweils bezogen auf das Melamin-Polyol-Gewicht, enthalten, werden im einzelnen auf folgende Weise hergestellt:

Melamin, Polyol und Stabilisator werden gemischt und bei Temperaturen von 30 bis 100°C, vorzugsweise 40 bis 80°C, üblicherweise in 1 bis 10, vorzugsweise 2 bis 6 Mahlpassagen in situ auf die beschriebenen Teilchengrößen zerkleinert und hierbei gleichzeitig dispergiert. Hierzu kann beispielsweise die Gesamtmenge an Melamin mit der gesamten Polyol- und Stabilisatormenge bei Temperaturen von beispielsweise 10 bis 30°C gemischt werden. Es ist jedoch auch möglich, die gesamte Polyolmenge mit einem bestimmten Teil des Melamins und Stabilisators zu mischen und dieses Gemisch auf eine bestimmte Teilchengröße des Melamins zu zerkleinern und danach der Mischung die restliche Melaminmenge einzuverleiben oder eine Teilmenge Polyol mit der gesamten Melaminmenge in Gegenwart des Stabilisators zu vermahlen und im Laufe des Mahlvorgangs zusätzliches Polyol und gegebenenfalls Stabilisator hinzuzufügen.

Die Zerkleinerung kann beispielsweise in mechanischen Dispergiervorrichtungen, vorzugsweise in Dispergiermaschinen mit hohen örtlichen Energiedichten mit Mahlkörpern, wie z. B. Rührwerkskugelmühlen, Sandmühlen, Netsch-Mühlen, Perl-Mühlen, Dyno-Mühlen, Planetenkugelmühlen und Kesselmühlen durchgeführt werden. Als Mahlkörper kommen vorzugsweise kugelförmige Mahlkörper in Betracht, die beispielsweise aus Glas, Keramik, Metall, hartem abriebfestem Kunststoff, z. B. Polyamid, sein können und deren Durchmesser zwischen 0,2 bis 8, vorzugsweise 0,4 bis 5 mm beträgt.

Die erfindungsgemäßen Melamin-Polyol-Dispersionen können ferner mit zusätzlichem Polyol gemischt und auf die erforderlichen Feststoffgehalte eingestellt werden. Die so erhaltenen, zur Verarbeitung kommenden Polyolkomponenten sind mehr als 4 Monate lagerstabil und zeigen keinerlei Melaminsedimentation.

Die Melamin-Polyol-Dispersionen werden vorzugsweise zur Herstellung von Polyurethanen, insbesondere Polyurethanschaumstoffen, verwendet. Sie können jedoch auch zur Herstellung von Polyisocyanurat- und Polycarbodiimidschaumstoffen eingesetzt werden.

Zur Herstellung der vorzugsweise schaumförmigen Polyurethane werden neben den erfindungsgemäßen Melamin-Polyol-Dispersionen die an sich bekannten Ausgangsstoffe, z. B. Polyole, Polyisocyanate, Katalysatoren, gegebenenfalls Treibmittel, Kettenverlängerungsmittel, Hilfs- und Zusatzstoffe verwendet.

Als Polyole kommen die eingangs zur Herstellung der Melamin-Polyol-Dispersion beschriebenen in Betracht.

Als Polyisocyanate eignen sich beispielsweise aliphatische, cycloaliphatische und aromatische mehrwertige, insbesondere zweiwertige Isocyanate. Im einzelnen seien beispielhaft genannt: aliphatische Diisocyanate wie Äthylen-, 1,4-Tetramethylen-, 1,6-Hexamethylen- und 1,12-Dodecandiisocyanat; cycloaliphatische Diisocyanate, wie Cyclohexan-1,3- und 1,4-diisocyanat sowie beliebige Gemische dieser Isomeren, 1-Isocyanato-3,3,5-trimethyl-5-isocyanatomethyl-cyclohexan, 2,4- und 2,6-Hexahydrotoluylen-diisocyanat sowie beliebige Gemische dieser Isomeren, 4,4'- und 2,4'-Diisocyanato-dicyclohexylmethan; aromatische Diisocyanate, wie 1,3- und 1,4-Phenylendiisocyanat, 2,4- und 2,6-Toluylendiisocyanat sowie beliebige Gemische dieser Isomeren, 2,2'-, 2,4'- und 4,4'-Diphenylmethan-diisocyanat und Naphthalin-1,5-diisocyanat; aromatische Polyisocyanate wie 4,4',4''-Triphenylmethan-triisocyanat, 2,4,6-Triisocyanatobenzol und Polyphenyl-polymethylen-polyisocyanate. Verwendet werden können ferner modifizierte Polyisocyanate, beispielsweise Carbodiimidgruppen aufweisende Polyisocyanate (DE-PS 1 092 007), Allophanatgruppen aufweisende Polyisocyanate (GB-PS 994 890; BE-PS 761 626), Isocyanuratgruppen aufweisende Polyisocyanate (DE-PS 1 022 789, DE-PS 1 222 067, DE-PS 1 027 394, DE-OS 1 929 034 und DE-OS 2 004 048), Urethangruppen aufweisende Polyisocyanate (BE-PS 752 261, US-PS 3 394 164), Biuretgruppen aufweisende Polyisocyanate (DE-PS 1 101 394, GB-PS 889 050) und Estergruppen aufweisende Polyisocyanate

5

(GB-PS 965 474, GB-PS 1 072 956, US-PS 3 567 763, DE-PS 1 231 688).

Bevorzugt verwendet werden die technisch gut zugänglichen aromatischen Di- und Polyisocyanate, wie 2,4- und 2,6-Toluylendiisocyanat sowie beliebige Gemische dieser Isomeren, 2,2'-, 2,4'- und 4,4'-Diphenylmethan-diisocyanat sowie beliebige Gemische dieser Isomeren, Mischungen aus 2,2'-, 2,4'-, 4,4'-Diphenylmethan-diisocyanaten und Polyphenyl-polymethylen-polyisocyanaten (Roh-MDI), Mischungen aus 2,4- und 2,6-Toluylen-diisocyanate und Roh-MDI und Carbodiimid-, Urethan-, Allophanat-, Isocyanurat-, Harnstoff- und Biuretgruppen aufweisende Polyisocyanate. Die genannten Di- und Polyisocyanate können einzeln oder in Form von Mischungen eingesetzt werden.

Geeignete Katalysatoren zur Beschleunigung der Polyurethanbildung zwischen den Pololen, dem Wasser, gegebenenfalls Kettenverlängerungsmitteln und den Polyisocyanaten sind beispielsweise tertiäre Amine, wie Dimethylbenzylamin, N,N,N',N'-Tetramethyl-diamino-äthyläther, Bis-(dimethylaminopropyl)-harnstoff, N-Methyl- bzw. N-Äthylmorpholin, Dimethylpiperazin, 1,2-Dimethylimidazol, 1-Azo-bicyclo-(3,3,0)-octan und vorzugsweise Triäthylendiamin, Metallsalze, wie Zinndioctoat, Bleioctoat, Zinn-diäthylhexoat und vorzugsweise Zinn-(IV)salze wie Dibutylzinndilaurat, Dibutylzinndiacetat, Tetrabutylzinndisulfid und Bis-(tri-n-butylzinn)oxid sowie insbesondere Mischungen aus tertiären Aminen und organischen Zinnsalzen. Vorzugsweise verwendet werden 0,1 bis 5,0 Gew.-% Katalysator auf Basis tertiärer Amine und/oder 0,01 bis 1,0 Gew.-% Metallsalze, bezogen auf das Polyolgewicht.

Zur Herstellung von Polyisocyanuratschaumstoffen haben sich die üblichen Cyclisierungs- und Polymerisationskatalysatoren für Polyisocyanate bewährt. Als Beispiele seien genannt: starke Basen, wie quarternäre Ammoniumhydroxide, beispielsweise Benzyltrimethylammoniumhydroxid; Alkalimetallhydroxide, beispielsweise Natrium- oder Kaliumhydroxid; Alkalimetallalkoxide, beispielsweise Natriummethylat und Kaliumisopropylat; Trialkylphosphine, beispielsweise Triäthylphosphin; Alkylaminoalkylphenole, beispielsweise 2,4,6-Tris-(dimethylaminomethyl)-phenol; 3- und/oder 4-substituierte Pyridine, beispielsweise 3- oder 4-Methylpyridin; metall-organische Salze, beispielsweise Tetrakis-(hydroxyäthyl)-natriumborat; Friedel-Crafts-Katalysatoren, beispielsweise Aluminiumchlorid, Eisen-(III)-chlorid, Borfluorid und Zinkchlorid und Alkalimetallsalze von schwachen organischen Säuren und Nitrophenolaten, beispielsweise Kaliumoctoat, Kalium-2-äthyl-hexoat, Kaliumbenzoat, Natriumpikrat und Phthalimid-kalium. Vorzugsweise verwendet werden die stark basischen N,N',N''-Tris-(dialkylaminoalkyl)-s-hexahydrotriazine, beispielsweise das N,N',N''-Tris-(dimethylaminopropyl)-s-hexahydrotriazin.

Die geeignete Menge an Katalysator zur Herstellung der erfindungsgemäßen Polyurethankunststoffe ist abhängig von der Wirksamkeit des in Frage kommenden Katalysators. Im allgemeinen hat es sich als zweckmäßig erwiesen, 1 bis 15 Gewichtsteile, vorzugsweise 3,5 bis 10 Gewichtsteile Katalysator für jeweils 100 Gewichtsteile an organischem Polyisocyanat zu verwenden.

Zu Treibmitteln, welche zur Herstellung von geschäumten Polyurethanen und Polyisocyanuraten verwendet werden können, gehört Wasser, das mit Isocyanatgruppen unter Bildung von Kohlendioxid reagiert. Die Wassermengen, die zweckmäßigerweise verwendet werden können, betragen 0,1 bis 3%, bezogen auf das Gewicht an Polyisocyanat. Gegebenenfalls können auch größere Wassermengen verwendet werden.

Andere verwendbare Treibmittel sind niedrig siedende Flüssigkeiten, die unter dem Einfluß der exothermen Polyadditions- bzw. Polymerisationsreaktion verdampfen. Geeignet sind Flüssigkeiten, welche gegenüber dem organischen Polyisocyanat inert sind und Siedepunkte unter 100° C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluoräthan und 1,1,2-Trichlor-1,2,2-trifluoräthan. Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung von geschäumten Polyurethanmassen hängt ab von der Schaumdichte, die man erreichen will, sowie gegebenenfalls von der Mitverwendung von Wasser. Im allgemeinen liefern Mengen von 5 bis 40 Gewichtsprozent, bezogen auf 100 Gewichtsteile organisches Polyisocyanat, zufriedenstellende Ergebnisse.

Gegebenenfalls ist es auch zweckmäßig, zur Herstellung der gegebenenfalls geschäumten Polyurethane neben den höhermolekularen Polyolen zusätzlich Kettenverlängerungsmittel und Vernetzer zu verwenden. Die Kettenverlängerungsmittel besitzen Molekulargewichte kleiner als 2000, vorzugsweise von 30 bis 600 und weisen vorzugsweise zwei aktive Wasserstoffatome auf. In Betracht kommen beispielsweise aliphatische und/oder aromatische Diole mit 2 bis 14, vorzugsweise 2 bis 6 Kohlenstoffatomen, wie Propandiol, Pentandiol, Hexandiol-1,6 und vorzugsweise Äthandiol, Diäthylenglykol, Butandiol-1,4 und Bis-(2-hydroxyäthyl)-hydrochinon, Diamine, wie Äthylendiamin und gegebenenfalls 3,3'- bzw. 3,3',5,5'-di- bzw. -tetraalkyl- oder halogensubstituierte 4,4'-Diaminodiphenylmethane, Isophorondiamin, Äthanolamin. Geeignete Vernetzer sind beispielsweise Triäthanolamin und Polyhydroxylverbindungen, wie Glycerin, Trimethylolpropan und niedermolekulare hydroxylgruppenhaltige Polyalkylenoxide aus den vorgenannten Ausgangsstoffen.

Der Reaktionsmischung können auch noch Zusatzstoffe einverleibt werden. Genannt seien beispielsweise oberflächenaktive Schaumstabilisatoren, Hydrolysenschutzmittel, Porenregler, fungistatisch und bakteriostatisch wirkende Substanzen, Farbstoffe, Pigmente und Flammschutzmittel.

In Betracht kommen beispielsweise oberflächenaktive Substanzen, welche zur Unterstützung der Homogenisierung der Ausgangsstoffe dienen und gegebenenfalls auch geeignet sind, die Zellstruktur der Schaumstoffe zu regulieren. Genannt seien beispielhaft Siloxan-Oxyalkylen-Mischpolymerisate und andere Organopolysiloxane, oxäthylierte Alkylphenole, oxäthylierte Fettalkohole, Paraffinöle, Rizinusöl- bzw. Rizinolsäureester und Türkischrotöl, die in Mengen von 0,2 bis 6 Gewichtsteilen pro 100 Gewichtsteile Polyisocyanat angewandt werden.

Neben Melamin können gegebenenfalls auch andere geeignete Flammschutzmittel der gegebenenfalls schaumfähigen Reaktionsmischung einverleibt werden.

Nähere Angaben über die obengenannten anderen üblichen Zusatzstoffe sind der Fachliteratur, beispielsweise der Monographie von J. H. Saunders und K. C. Frisch, »High Polymers«, Band XVI, Polyurethanes, Teil 1 und 2, Verlag Interscience Publishers 1962 bzw. 1964, zu entnehmen.

Wie bereits dargelegt wurde, können zur Herstellung der gegebenenfalls geschäumten Polyurethan-Kunststoffe die Melamin-Polyol-Dispersionen mit den obengenannten Polyolen verdünnt und so auf den erforderlichen, vorteilhaften Füllstoffgehalt eingestellt werden.

Zur Herstellung von Polyurethanschaumstoffen werden die Polyisocyanate und Polyole bzw. Mischungen aus Polyolen und Kettenverlängerungsmitteln bzw. Vernetzern in solchen Mengen zur Umsetzung gebracht, daß das Verhältnis von Zerewitinoff-aktiven Gruppen : NCO-Gruppen 1 : 0,8 bis 2,5, vorzugsweise 1 : 0,9 bis 1,2, insbesondere ungefähr 1 : 1 beträgt und der Melamingehalt in der schaumfähigen Mischung 5 bis 40 Gew.-%, vorzugsweise 10 bis 20 Gew.-%, bezogen auf das Gewicht der Polyisocyanat-Polyolmischung, ist.

Zur Herstellung von Polyisocyanuratschaumstoffen haben sich Mengenverhältnisse von NCO-Gruppen des Polyisocyanats zu Hydroxylgruppen des Polyols von 6 bis 60 : 1, vorzugsweise 2 bis 10 : 1 bewährt. Der Melamingehalt beträgt 3 bis 40 Gew.-%, vorzugsweise 10 bis 20 Gew.-%, bezogen auf das Gesamtgewicht von Polyisocyanat und Polyol.

Die gegebenenfalls geschäumten Polyurethan-Kunststoffe werden nach dem Präpolymer- und vorzugsweise dem one shot-Verfahren hergestellt. Hierzu mischt man die Polyisocyanate mit der Melamin-Polyol-Dispersion bzw. Polyolen, Katalysatoren, Treibmitteln und gegebenenfalls Kettenverlängerungsmitteln und Zusatzstoffen in den genannten Mengenverhältnissen intensiv bei Temperaturen von 0 bis 50° C, vorzugsweise 15 bis 40° C, und läßt danach die Reaktionsmischung in offenen oder geschlossenen, gegebenenfalls temperierten Formen aufschäumen.

Die erfindungsgemäßen Melamin-Polyol-Dispersionen finden vorzugsweise Verwendung zur Herstellung von Blockweichschaumstoffen, da sie hier — neben der Verbesserung der Flammbeständigkeit — eine zellöffnende Wirkung zeigen. Die Polyurethanschaumstoffe besitzen bei freier Aufschäumung Dichten von 10 bis 300 g/Liter, wobei die Polyurethan-Weichschaumstoffe Dichten von 10 bis 60 g/Liter, die halbharten Schaumstoffe Dichten von 60 bis 130 g/Liter und die Polyurethan-Integralschaumstoffe Dichten von 60 bis 800 g/Liter aufweisen. Die Polyurethan-Schaumstoffe zeichnen sich insbesonders durch ihren hohen Offenzelligkeitsgrad, gute Stauchhärten und ihre Flammbeständigkeit aus und finden u. a. im Bauwesen zur Schall- und Wärmeisolierung Verwendung. Die Produkte werden vorzugsweise als Polsterschaumstoffe, auch für Sicherheitsabdeckungen sowie für Schuhsohlen, Armlehnen, Nackenstützen, Sitzpolster u. a. verwendet. Die Polyisocyanuratschaumstoffe besitzen Dichten von 5 bis 100 g/Liter, vorzugsweise von 10 bis 50 g/Liter. Aufgrund ihrer vorzüglichen Isoliereigenschaften eignen sie sich besonders für Doppelbandelemente.

Die in den Beispielen genannten Teile sind Gewichtsteile.

### Beispiele 1 bis 4

### Allgemeine Herstellungsvorschrift

Das Melamin, Polyol und die Stabilisatoren werden bei ungefähr 25° C gemischt und anschließend in einer Perlmühle mit Glaskugeln mit einem Durchmesser von 0,8 bis 3 mm als Mahlkörper gemahlen. Die Drehzahl der Perlmühle wurde so gewählt, daß die örtliche Energiedichte bei einer installierten Leistung von 36 kW ungefähr 20 bis 100 kWh/m³ betrug und während des Mahlvorgangs die Temperatur ungefähr 70° C lag. Die Anzahl der Mahlpassagen war 4. Eine Sedimentationsanalyse der erhaltenen Dispersion ergab, daß weniger als 10 Gew.-% der Melaminpartikel größer als 10 μm waren.

Die verwendeten Ausgangskomponenten, der Wassergehalt, die Lagerstabilität und die Viskosität der erhaltenen Melamin-Polyol-Dispersionen sind in Tabelle 1 zusammengefaßt.

Tabelle 1

| | Beispiele Nr. | | | | Ver-gleichs-beispiel |
|---|---|---|---|---|---|
| | 1 | 2 | 3 | 4 | A |
| Polyätherol auf Basis Trimethylol-propan, 1,2-Propylenoxid und Äthylenoxid Molekulargewicht ca. 4800 Hydroxylzahl ca. 35 (Teile) | 49 | 48 | 50 | 48 | 50 |
| Melamin (Teile) | 50 | 50 | 50 | 50 | 50 |
| Durch Flammenhydrolyse gewonnene Kieselsäure ( ®Aerosil 200, Hersteller Degussa) (Teile) | 1,0 | 2,0 | — | 2,0 | — |
| Natrium-Laurylsulfat (Duponol Me Dry, Hersteller Dupont) (Teile) | — | — | 0,04 | 0,04 | — |
| Kalium-fluoralkylcarboxylat (Fluorad FC 128, Hersteller 3 M Company) (Teile) | — | — | 0,01 | 0,01 | — |
| Wassergehalt (Gew.-%) | 0,08 | 0,07 | 0,06 | 0,08 | 0,1 |
| Viskosität nach 4monatiger Lagerung | | | | | |
| bei 50°C (mPas) | 2550 | 2650 | 2450 | 3100 | 2500 |
| bei 75°C (mPas) | 1150 | 1150 | 1050 | 1150 | 1150 |
| Bermerkungen: | Lagerstabil keine Ablagerungen | | | | schwache Sedimentation |

Vergleichsbeispiele B — P

Melamin, Polyol und Stabilisator werden bei einer Temperatur von 80° C mit einem Intensiv-Mischer nach dem Stator-Rotor-Prinzip mit einer Spaltbreite von 0,5 mm und einem Welle-Durchmesser-Verhältnis 4 : 1 bei einer Drehzahl von 2000 min$^{-1}$ 60 sec lang gemischt.

Die verwendeten Ausgangskomponenten und die Viskositäten der erhaltenen Melamin-Polyol-Mischungen sind in Tabelle 2 zusammengefaßt.

Tabelle 2

| | Vergleichsbeispiele | | | | | | | | | | | | | |
|---|---|---|---|---|---|---|---|---|---|---|---|---|---|---|
| | B | C | D | E | F | G | H | J | K | L | M | N | O | P |
| Polyätherol auf Basis Trimethylolpropan, 1,2-Propylenoxid und Äthylenoxid Molekulargewicht ca. 4800 Hydroxylzahl ca. 35 (Teile) | 50 | 49,5 | 50 | 50 | 49 | 48,75 | 47,5 | 45,0 | 42,5 | 40,0 | 45 | 40 | 45 | 40 |
| Melamin (Teile) | 50 | 50 | 50 | 50 | 50 | 50 | 50 | 50 | 50 | 50 | 50 | 50 | 50 | 50 |
| Aerosil 200 (Teile) | — | 0,5 | — | — | 1,0 | — | — | — | — | — | — | — | — | — |
| Duponol Me Dry (Teile) | — | — | 0,04 | 0,04 | — | — | — | — | — | — | — | — | — | — |
| Fluorad FC 128 (Teile) | — | — | 0,01 | — | — | — | — | — | — | — | — | — | — | — |
| Fluorad FC 170 (Teile) | — | — | — | 0,01 | — | — | — | — | — | — | — | — | — | — |
| Türkisschrotöl (Teile) | — | — | — | — | — | 1,25 | 2,5 | 5,0 | 7,5 | 10,0 | — | — | — | — |
| Aluminiumsilikat ( ®Transpafill, Hersteller Degussa) (Teile) | — | — | — | — | — | — | — | — | — | — | 5 | 10 | — | — |
| Gefällte Kieselsäure (Hoesch KS 300, Hersteller Hoesch Chemie, Düren) (Teile) | — | — | — | — | — | — | — | — | — | — | — | — | 5 | 10 |
| Wassergehalt, Gew.-% | — | — | — | — | — | — | 1,5 | 2,7 | 4,8 | 5,5 | 0,26 | — | 0,30 | — |
| Viskosität | | | | | | | | | | | | | | |
| 23°C (mPas) | 800 | 620 | 480 | 1 200 | 1 200 | — | 11 000 | 18 000 | 22 000 | 30 000 | 45 000 | 50 000 | 19 000 | 18 000 |
| 50°C*) (mPas) | 1 550 | 1 850 | 1 400 | 1 500 | 2 050 | 2 300 | 2 150 | 2 250 | 2 050 | 1 400 | 450 | 1 150 | 1 400 | 650 |
| Bemerkungen | | starke Sedimentation | | schwache | starke Sedimentation sehr schwer redispergierbar | | | | | | abgesetzt | thixotrop nicht gießbar | abgesetzt | feste Paste |

*) Nach der Redispergierung.

Die Vergleichsbeispiele zeigen, daß die mit Hilfe eines Intensivmischers hergestellten Melamin-Polyol-Mischungen nicht lagerstabil sind.

Herstellung von Polyurethan-Weichschaumstoffen

Beispiel 5

| 464 Teile | eines Polyätherols auf Basis Glycerin-Propylenoxid-Äthylenoxid mit einer OH-Zahl von 35 |
|---|---|
| 491,6 Teile | einer Melamin-Polyol-Dispersion gemäß Beispiel 4 |
| 40 Teile | Trichlorfluormethan |
| 19,6 Teile | Wasser |
| 7 Teile | einer oberflächenaktiven Substanz (®Tegostab B 4690, Fa. Goldschmidt, Essen) |
| 1,4 Teile | Pentamethyldiäthylentriamin |
| 1,4 Teile | Bis-[2-(N,N-dimethylamino)-äthyl]-äther und |
| 1,4 Teile | einer 33%igen Lösung von Diazabicyclooctan in Dipropylenglykol werden innig vermischt. |

Zu dieser Mischung werden

| 166 Teile | Toluylen-diisocyanat (Isomerenverhältnis 2,4- : 2,6-=80 : 20) und |
|---|---|
| 89,4 Teile | einer Mischung aus Diphenylmethandiisocyanaten und Polyphenyl-polymethylen-polyisocyanaten (Roh-MDI) hinzugefügt und das Gemisch 8 Sekunden lang mit 1650 Umdrehungen pro Minute gerührt. |

Die schaumfähige Mischung wird in eine auf 40°C erwärmte Aluminiumform mit Deckel (40 × 40 × 10 cm) eingebracht und in der geschlossenen Form ausreagieren lassen. Nach 5 bis 15 Minuten kann das fertige Teil entformt werden.

Man erhält einen feinzelligen, offenzelligen Schaumstoff, der zur Bestimmung der mechanischen Werte zerschnitten wird. Die Prüfkörper für den Test der Schwerentflammbarkeit (B1, DIN 4102) wurden in einer Holzkiste mit den Maßen 40 × 30 × 120 cm durch freies Aufschäumen hergestellt.

Beispiele 6 bis 14

Man verfährt analog den Angaben von Beispiel 5, verwendet jedoch die in Tabelle 3 genannten Ausgangskomponenten und Mengen. Die dazugehörigen mechanischen Werte der erhaltenen Schaumstoffe sind in Tabelle 4 zusammengefaßt.

In Tabelle 3 bedeuten:

| Polyol I: | Polyätherol auf Basis Propylenglykol-Propylenoxid-Äthylenoxid mit einer OH-Zahl von 28. |
|---|---|
| Polyol II: | Polyätherol auf Basis Trimethylolpropan-Propylenoxid-Äthylenoxid mit einer OH-Zahl von 28. |
| Treibmittel: | Trichlorfluormethan |
| Kat. A: | Pentamethyldiäthylentriamin |
| Kat. B: | Bis-[2-(N,N-dimethylamino)-äthyl]-äther |
| Kat. C: | Diazabicyclooctan-Formiat |
| Kat. D: | Diazabicyclooctan-Formiat 33%ige Lösung in Dipropylenglykol |
| B 4690: | ®Tegostab B 4690; oberflächenaktives Mittel, Handelsprodukt der Goldschmidt AG, Essen. |
| Mel.: | reines Melamin |
| | Aus Polyol I bzw. Polyol II und Melamin werden analog den Angaben von Beispiel 4 Melamin-Polyol-Dispersionen mit einem Melamingehalt von 50 Gew.-% hergestellt, die danach mit zusätzlichem Polyol I bzw. Polyol II verdünnt und so verarbeitet werden. Die Mengenangaben in Tabelle 3 beziehen sich auf Gesamtpolyol und reines Melamin. |
| TDI: | Mischung aus 2,4- und 2,6-Toluylen-diisocyanat im Gewichtsverhältnis 80 : 20 |
| Roh-MDI: | Mischung aus Diphenylmethan-diisocyanat und Polyphenyl-polymethylen-polyiso-cyanaten. |
| ureth. MDI: | mit Dipropylenglykol und niedermolekularem Polypropylenglykoläther modifiziertes 4,4'-Diphenylmethan-diisocyanat, NCO-Gehalt 28,6% (®Desmodur 44 P90 der Bayer AG). |

**Tabelle 3**
Polyurethan-Weichschäume auf Basis der erfindungsgemäßen Melamin-Polyol-Dispersionen

| Beispiel Nr. | Polylol [Teile] | $H_2O$ [Teile] | Treibmittel [Teile] | Kat. A [Teile] | Kat. B [Teile] | Kat. C [Teile] | B 4690 [Teile] | Mel. [Teile] | TDI [Teile] | roh-MDI [Teile] | ureth. MDI [Teile] |
|---|---|---|---|---|---|---|---|---|---|---|---|
| 6 | 68,8 I | 1,86 | 10,3 | 0,14 | 0,14 | 0,14 | 1,0 | 17,7 | — | — | 30,0 |
| 7 | 68,8 I | 1,86 | 10,3 | 0,14 | 0,14 | 0,14 | 1,0 | 17,7 | — | — | 35,4 |
| 8 | 68,8 I | 1,86 | 10,3 | 0,14 | 0,14 | 0,14 | 1,0 | 17,7 | — | — | 40,6 |
| 9 | 68,8 I | 1,86 | 10,3 | 0,14 | 0,14 | 0,14 | 1,0 | 17,7 | — | 33,0 | — |
| 10 | 82,4 I | 2,64 | — | 0,16 | 0,16 | 0,16 | 0,82 | 13,7 | 18,3 | — | 18,3 |
| 11 | 82,4 I | 2,64 | — | 0,16 | 0,16 | 0,16 | 0,82 | 13,7 | 23,3 | — | 10,0 |
| 12 | 69,2 II | 2,22 | 7,9 | 0,1 | 0,1 | 0,1 Kat. D | 0,52 | 19,8 | — | 8,0 | 32,0 |
| 13 | 66,5 I | 2,13 | 11,4 | 0,13 | 0,13 | 0,13 Kat. D | 0,5 | 19,0 | 16,9 | — | 11.25 |
| 14 | 61,3 I | 2,2 | 12,3 | 0,12 | 0,12 | 0,12 Kat. D | 0,86 | 23,0 | 17,9 | 9,6 | — |

Tabelle 4
Mechanische Werte

| Beispiel Nr. | Raumgewicht [g/l] | Zugfestigkeit [KPa] | Dehnung [%] | Stauchhärte [N/mm²] | | | Entflammbarkeit |
|---|---|---|---|---|---|---|---|
| | DIN 53 420 | DIN 53 571 | DIN 53 541 | bei 20% | 40% DIN 53 577 | 60% Stauchung | DIN 4 102 |
| 5 | 40 | 45 | 95 | 0,15 | 0,25 | 0,4 | B2, B1 |
| 6 | 50 | 55 | 100 | 0,12 | 0,18 | 0,33 | B2, B1 |
| 7 | 51 | 90 | 85 | 0,39 | 0,55 | 0,94 | B2, B1 |
| 8 | 53 | 105 | 80 | 0,52 | 0,73 | 1,25 | B2, B1 |
| 9 | 30 | 30 | 85 | 0,14 | 0,20 | 0,4 | B2, B1 |
| 10 | 50 | 95 | 150 | 0,16 | 0,24 | 0,45 | B2, B1 |
| 11 | 49 | 100 | 180 | 0,48 | 0,70 | 1,05 | B2, B1 |
| 12 | 44 | 70 | 50 | 0,3 | 0,53 | 0,98 | B2, B1 |
| 13 | 26 | 30 | 135 | 0,16 | 0,47 | 0,94 | B2, B1 |
| 14 | 23 | 25 | 95 | 0,16 | 0,47 | 0,95 | B2, B1 |

## Beispiel 15

In 30 Teilen eines trifunktionellen, mit Äthylendioxid modifizierten Polypropylenglykoläthers (mittleres Molekulargewicht ungefähr 4800, OH-Zahl etwa 35, Anteil an primären Hydroxylgruppen etwa 75%, bezogen auf die reaktionsfähigen Hydroxylgruppen) werden 30 Teile Melamin analog den Angaben von Beispiel 4 dispergiert. Die erhaltene Dispersion wird mit 70 Teilen des obengenannten Äthylenoxid modifizierten Polypropylenglykoläthers verdünnt.

Diese Mischung wird auf einer Schäummaschine Typ Zippel DS 1 unter Zudosierung von Luft mit 3 Gewichtsteilen Wasser, 0,6 Gewichtsteilen eines handelsüblichen Silikon-Schaumstabilisators (Tegostab B 4113 der Fa. Goldschmidt AG, Essen), 0,8 Gewichtsteilen einer 33%igen Lösung von Triäthylendiamin in Dipropylenglykol, 0,5 Gewichtsteilen Triäthylamin, 27,2 Gewichtsteilen rohem MDI und 18,1 Gewichtsteilen Toluylendiisocyanat (2,4- und 2,6-Isomerengemisch 80 : 20) intensiv vermischt und zur Reaktion gebracht.

Man erhält einen Polyurethanschaumstoff mit einer porösen Oberflächenhaut, der so offenzellig ist, daß kein Schrumpf auftritt. Folgende physikalische Werte wurden an dem Schaumstoff ermittelt:

| | |
|---|---|
| Raumgewicht, DIN 53 420 | 43,7 kg/m$^3$ |
| Zugfestigkeit, DIN 53 571 | 86 kPa |
| Bruchdehnung, DIN 53 571 | 82% |
| Stauchhärte, DIN 53 577 | |
| bei 20% Stauchung | 2,1 kPa |
| bei 40% Stauchung | 3,1 kPa |
| bei 60% Stauchung | 6,5 kPa |
| Druckverformungsrest, DIN 53 572 | |
| bei 90% Verformung/70° C/22 h | 4,1% |
| Elastizität, ASTM D 1564-71 | 53,3% |
| Luftdurchlässigkeit (Staudruck) | 0,29 mbar |
| Einreihung in Baustoffklasse | Baustoffklasse B1 |
| nach DIN 4102, Teil 1 (9.77) | kein brennendes Abfallen |

## Vergleichsbeispiel Q

Verfährt man analog den Angaben von Beispiel 15, verwendet jedoch anstelle der Melamin-Polyol-Dispersion eine Mischung aus 100 Teilen des obengenannten trifunktionellen Äthylenoxid-modifizierten Polypropylenglykoläthers und 30 Teilen Melamin, so entsteht ein elastischer, weicher Polyätherurethanschaumstoff mit einer dicken, geschlossenen Oberflächenhaut, dessen Anteil an geschlossenzelligen Poren so groß ist, daß bereits wenige Minuten nach Abschluß der Treibreaktion starker Schrumpf auftritt.

## Beispiel 16

Man verfährt analog den Angaben von Beispiel 15, verwendet jedoch anstelle von 3 Teilen 4 Teile Wasser, anstelle von 27,2 Teilen 34,8 Teile Roh-MDI und anstelle von 18,1 Teilen 23,2 Teile Toluylen-diisocyanat.

Der erhaltene Schaumstoff besitzt eine poröse Oberflächenhaut und ist so offenzellig, daß kein Schrumpf auftritt. An dem Schaumstoff wurden folgende physikalische Werte gemessen:

| | |
|---|---|
| Raumgewicht, DIN 53 420 | 32,6 kg/m$^3$ |
| Zugfestigkeit, DIN 53 571 | 77 kPa |
| Bruchdehnung, DIN 53 571 | 79% |
| Stauchhärte, DIN 53 577 | |
| bei 20% Stauchung | 1,8 kPa |
| bei 40% Stauchung | 2,5 kPa |
| bei 60% Stauchung | 5,1 kPa |
| Druckverformungsrest, DIN 53 572 | |
| (bei 90% Verformung/70° C/22 h) | 8,5% |
| Elastizität, ASTM D 1564-71 | 52,8% |
| Luftdurchlässigkeit (Staudruck) | 0,38 mbar |
| Einteilung in Baustoffklasse | Baustoffklasse B1 |
| nach DIN 4102/Teil 1 (9.77) | kein brennendes Abfallen |

**0 023 987**

Vergleichsbeispiel R

Verfährt man analog den Angaben von Beispiel 16, verwendet jedoch anstelle der Melamin-Polyol-Dispersion eine Melamin-Polyol-Mischung entsprechend Vergleichsbeispiel Q, so erhält man einen Schaumstoff mit einer geschlossenen, dicken Oberfläche, der stark schrumpft.

**Patentansprüche**

1. Stabile Melamin-Polyol-Dispersionen, enthaltend

A) 5 bis 70 Gew.-%, bezogen auf das Melamin-Polyol-Gewicht, Melamin, wobei mindestens 90% der Melaminpartikel eine Teilchengröße von kleiner als 10 µm besitzen,
B) 95 bis 30 Gew.-%, bezogen auf das Melamin-Polyol-Gewicht, eines Polyols mit einem Molekulargewicht von 200 bis 16 000 und
C) 0,001 bis 20 Gew.-%, bezogen auf das Melamingewicht, eines oder mehrerer Stabilisatoren,

dadurch gekennzeichnet, daß man als Stabilisatoren Verbindungen aus der Gruppe

a)   der Kieselsäuren und Silikate,
b)   der Salze von perfluorierten Alkylcarbonsäuren mit 4 bis 20 Kohlenstoffatomen, Salze von Alkylsulfonsäuren und perfluorierten Alkylsulfonsäuren mit 4 bis 20 Kohlenstoffatomen und Polyperfluorätherole mit Molekulargewichten von 300 bis 6000 und/oder
c)   der Salze von Fettalkoholsulfaten mit 6 bis 30 Kohlenstoffatomen

verwendet und daß das Melamin in situ in den Polyolen in Gegenwart der Stabilisatoren mit Energiedichten von 10 bis 3000 kWh/m³ zerkleinert worden ist.

2. Stabile Melamin-Polyol-Dispersionen nach Anspruch 1, dadurch gekennzeichnet, daß als Polyole di- und trifunktionelle Polyätherole mit Molekulargewichten von 200 bis 8000 verwendet werden.

3. Verfahren zur Herstellung von stabilen Melamin-Polyol-Dispersionen nach Anspruch 1 aus

A)   5 bis 70 Gew.-%, bezogen auf das Melamin-Polyol-Gewicht, Melamin,
B)   95 bis 30 Gew.-%, bezogen auf das Melamin-Polyol-Gewicht, Polyol und
C)   0,001 bis 20 Gew.-%, bezogen auf das Melamingewicht, mindestens eines Stabilisators,

dadurch gekennzeichnet, daß man als Stabilisatoren Verbindungen aus der Gruppe

a)   der Kieselsäuren und Silikate,
b)   der Salze von perfluorierten Alkylcarbonsäuren mit 4 bis 20 Kohlenstoffatomen, Salze von Alkylsulfonsäuren und perfluorierten Alkylsulfonsäuren mit 4 bis 20 Kohlenstoffatomen und Polyperfluorätherole mit Molekulargewichten von 300 bis 6000 und/oder
c)   der Salze von Fettalkoholsulfaten mit 6 bis 30 Kohlenstoffatomen

verwendet und das Melamin in situ in den Polyolen in Gegenwart des Stabilisators mit örtlichen Energiedichten von 10 bis 3000 kWh/m³ so zerkleinert, daß mindestens 90% der Melaminpartikel eine Teilchengröße von kleiner als 10 µm besitzen und hierbei gleichzeitig dispergiert.

4. Verwendung der stabilen Melamin-Polyol-Dispersionen nach Anspruch 1 zur Herstellung von gegebenenfalls geschäumten Polyurethankunststoffen.

**Claims**

1. A stable melamine-polyol dispersion consisting of

A)   5 to 70 percent by weight, based on the weight of melamine and polyol, of melamine, 90 percent of the melamine particles having a particle size of less than 10 µm,
B)   95 to 30 percent by weight, based on the weight of melamine and polyol, of a polyol having a molecular weight of 200 to 16,000, and
C)   0.001 to 20 percent by weight, based on the weight of melamine, of one or more stabilizers, wherein compounds selected from the group consisting of

a)   silicic acids and silicates,
b)   salts of perfluorinated alkyl carboxylic acids
having 4 to 20 carbon atoms, salts of alkyl sulfonic acids and perfluorinated alkyl sulfonic acids having 4 to 20 carbon atoms, and polyperfluoroether polyols having molecular weights

14

of from 300 to 6000, and/or

c) salts of fatty alcohol sulfates having 6 to 30 carbon atoms are used as stabilizers, and the melamine has been comminuted in situ in the polyol in the presence of the stabilizer, using energy densities of from 10 to 3000 kWh/m$^3$.

2. A stable melamine-polyol dispersion as claimed in claim 1, wherein di- and trifunctional polyoxyalkylene polyether polyols having molecular weights of from 200 to 8000 are used as polyols.

3. A process for the preparation of a stable melamine-polyol dispersion as claimed in claim 1, consisting of

A) 5 to 70 percent by weight, based on the weight of melamine and polyol, of melamine,
B) 95 to 30 percent by weight, based on the weight of melamine and polyol, of a polyol, and
C) 0.001 to 20 percent by weight, based on the weight of melamine, of one or more stabilizers, wherein compounds selected from the group consisting of

a) silicic acids and silicates,
b) salts of perfluorinated alkyl carboxylic acids
having 4 to 20 carbon atoms, salts of alkyl sulfonic acids and perfluorinated alkyl sulfonic acids having 4 to 20 carbon atoms, and polyperfluoroether polyols having molecular weights of from 300 to 6000, and/or
c) salts of fatty alcohol sulfates having 6 to 30 carbon atoms
are used as stabilizers, and the melamine is comminuted in situ in the polyol in the presence of the stabilizer, using local energy densities of from 10 to 3000 kWh/m$^3$, in such a manner that 90 percent of the melamine particles have a particle size of less than 10 µm and are simultaneously dispersed.

4. The use of a stable melamine-polyol dispersion as claimed in claim 1 for the production of optionally foamed polyurethane plastics.

## Revendications

1. Dispersions stables de mélamine et de polyol, contenant:

A) 5 à 70% en poids, par rapport au poids de la mélamine et du polyol, de mélamine, dont 90% au moins des particules possèdent une granulométrie inférieure à 10 µm;
B) 95 à 30% en poids, par rapport au poids de la mélamine et du polyol, d'un polyol avec un poids moléculaire de 200 à 16 000 et
C) 0,001 à 20% en poids, par rapport au poids de la mélamine, d'un stabilisant ou d'un mélange de stabilisants,

caractérisées en ce que les stabilisants sont choisis parmi:

a) les acides siliciques et les silicates,
b) les sels d'acides alcoyl-carboxyliques en $C_4$ à $C_{20}$ perfluorés, les sels d'acides alcoyl-sulfoniques et d'acides alcoyl-sulfoniques perfluorés en $C_4$ à $C_{20}$ et les polyperfluor-éthérols d'un poids moléculaire de 300 à 6000 et(ou)
c) les sels de sulfates d'alcools gras en $C_6$ à $C_{30}$, et que la mélamine a été réduite in situ dans le polyol, en présence des stabilisants, avec des intensités d'énergie de 10 à 3000 kWh/m$^3$.

2. Dispersions stables de mélamine et de polyol suivant la revendication 1, caractérisées en ce que les polyols sont choisis parmi les poly-éthérols di- et trifonctionnels avec des poids moléculaires de 200 à 8000.

3. Procédé de préparation des dispersions stables de mélamine et de polyol suivant la revendication 1, formées de:

A) 5 à 70% en poids, par rapport au poids de la mélamine et du polyol, de mélamine,
B) 95 à 30% en poids, par rapport au poids de la mélamine et du polyol, de polyol et
C) 0,001 à 20% en poids, par rapport au poids de la mélamine, d'au moins un stabilisant,

caractérisé en ce que les stabilisants sont choisis parmi:

a) les acides siliciques et les silicates,
b) les sels d'acides alcoyl-carboxyliques en $C_4$ à $C_{20}$ perfluorés, les sels d'acides alcoyl-sulfoniques et d'acides alcoyl-sulfoniques perfluorés en $C_4$ à $C_{20}$ et les polyperfluor-éthérols d'un poids moléculaire de 300 à 6000 et(ou)
c) les sels de sulfates d'alcools gras en $C_6$ à $C_{30}$,

et la mélamine est réduite in situ dans le polyol, en présence du stabilisant, avec des intensités d'énergie localisées de 10 à 3000 kWh/m³, jusqu'à l'obtention de particules de mélamine, dont au moins 90% possèdent une granulométrie inférieure à 10 μm et qui sont simultanément dispersées.

4. Utilisation de dispersions stables de mélamine et de polyol suivant la revendication 1 pour la fabrication de polyuréthannes plastiques éventuellement expansés.